# EUROPÄISCHE PATENTANMELDUNG

(11) **EP 3 275 814 A1**
(43) Veröffentlichungstag der Anmeldung: **31.01.2018**
(21) Anmeldenummer: 17183243.9
(22) Anmeldetag: 26.07.2017
(51) Int. Cl.: B65G 53/52, B65G 53/56

(54) **KUPPLUNGSBAHNHOF EINES PNEUMATISCHEN FÖRDERSYSTEMS**

(30) Priorität: 27.07.2016 DE 202016104117 U
(71) Anmelder: pal plast GmbH, 63165 Mühlheim am Main (DE)
(72) Erfinder: Wirnik, Amit, 63165 Mühlheim am Main (DE)
(74) Vertreter: Heinze, Ekkehard

(57) **Zusammenfassung**

Kupplungsbahnhof eines pneumatischen Fördersystems für schüttfähiges Material, der eine reguläre Parallel-Anordnung einer Mehrzahl von jeweiligen Enden ankommender und abgehender Rohre, die in zueinander parallelen Ebenen verlaufen, die im Gebrauchszustand des Kupplungsbahnhofs eine vertikale Achse einschließen, mit mindestens teilweise lösbaren Rohrkupplungen, Rohrbögen und Abzweigstücken in einem Verteilgestell umfasst, wobei mindestens ein Teil der Rohrkupplungen, Rohrbögen und Abzweigstücken aus einer wärmebehandelten Edelstahllegierung gefertigt ist und im Verteilgestell unter einem rechten Winkel zu der Parallel-Anordnung ankommender und abgehender Rohre verlaufende Querrohre zum Transport von Betriebsmedien einer Kunststoffverarbeitungsanlage, die das Fördersystem einschließt, gehaltert sind.

## Beschreibung

Die Erfindung betrifft ein pneumatisches Fördersystem für schüttfähiges Material. Insbesondere betrifft sie einen Kupplungsbahnhof eines pneumatischen Fördersystems für schüttfähiges Material, der eine reguläre Parallel-Anordnung einer Mehrzahl von jeweiligen Enden ankommender und abgehender Rohre, die in zueinander parallelen Ebenen verlaufen, die im Gebrauchszustand des Kupplungsbahnhofs eine vertikale Achse einschließen, mit mindestens teilweise lösbaren Rohrkupplungen, Rohrbögen und Abzweigstücken in einem Verteilgestell umfasst.

Derartige Schüttgut-Verteilerstellen, auch bezeichnet als "Kupplungsbahnhof", sind bekannt und in entsprechenden Fördersystemen im praktischen Einsatz; vgl. etwa den Firmenprospekt "Edelstahl-Rohrbogen..." der hs-Umformtechnik GmbH, D 97947 Grünsfeld-Paimar, Februar 2013.

In solchen Kupplungsbahnhöfen treten verschleißbedingte Ausfälle auf, die zu Produktionsunterbrechungen der entsprechenden Anlage führen können und Anlass für arbeits- und kostenaufwändige Reparaturen sind. Zudem ist nach den Erfahrungen der Erfinder der Aufbau der bekannten Fördersysteme, speziell im Bereich der Kupplungsbahnhöfe, noch relativ komplex, was ebenfalls zu Störungsrisiken für den Anlagenbetrieb führt.

Der Erfindung liegt daher die Aufgabe zu Grunde, einen verbesserten und insbesondere in seiner Leistungsfähigkeit, Zuverlässigkeit und störungsfreien Betriebsdauer bisherigen Anordnungen überlegenen Kupplungsbahnhof bereitzustellen.

Diese Aufgabe wird durch einen Kupplungsbahnhof mit den Merkmalen des Anspruchs 1 gelöst. Zweckmäßige Fortbildungen des Erfindungsgedankens sind Gegenstand der abhängigen Ansprüche.

Die Erfindung schließt den Gedanken ein, mindestens einen Teil der Rohrkupplungen, Rohrbögen und Abzweigstücken aus einer wärmebehandelten Edelstahllegierung auszuführen. Hierdurch erhöhen sich zwar etwas die Materialkosten, dies wird jedoch nach den Untersuchungen der Erfinder durch eine erhöhte Verschleißbeständigkeit der entsprechenden Teile und eine hierdurch erzielte erheblich höhere störungsfreie Betriebsdauer mehr als wett gemacht.

Außerdem schließt die Erfindung den Gedanken ein, im Verteilgestell unter einem rechten Winkel zu der Parallel-Anordnung ankommender und abgehender Rohre verlaufende Querrohre zum Transport von Betriebsmedien einer Kunststoffverarbeitungsanlage, die das Fördersystem einschließt, vorzusehen. Der Kupplungsbahnhof erfüllt mithin eine gegenüber bisherigen Anordnungen zusätzliche Funktion und trägt somit zu einer Vereinfachung der Gesamtanordnung und zu einer erleichterten Überwachung und Wartung des Fördersystems bei.

In einer Ausführung der Erfindung sind die erwähnten zusätzlichen Querrohre mindestens für Druckluft und ein Wärme- oder Kühlmedium vorgesehen.

In einer weiteren Ausführung sind die Querrohre nahe dem Boden des Verteilgestells geführt. Hierdurch wird die übliche Anordnung der ankommenden und abgehenden Rohre für das schüttfähige Material praktisch nicht gestört und kann beibehalten werden, was die Einführung des neuartigen Kupplungsbahnhofs in bekannte Fördersysteme erheblich erleichtert.

In weiteren Ausführungen sind die Querrohre mit Abzweigen versehen, welche an einer Seitenfläche des Verteilgestells gehaltert und im Wesentlichen in einer zu den Ebenen der Parallel-Anordnung parallelen Ebene verlaufen. Diese Führung der Abzweige sichert eine reguläre Gesamtanordnung aller im Kupplungsbahnhof vereinigten ankommenden und abgehenden Rohre bzw. Abzweige, einschließlich der Medien-Rohre, und somit eine gute Übersichtlichkeit der neuartigen Gesamt-Rohranordnung im Kupplungsbahnhof.

In weiteren Ausführungen ist vorgesehen, dass die Rohrbögen und/oder Abzweigstücke aus einer wärmebehandelten Edelstahllegierung der Legierung V2A oder ähnlicher gefertigt sind, die einer Wärmebehandlung in einer Salzschmelze unterzogen wurde. Diese Ausführungen sichern in besonderem Maße die gewünschte Verschleißbeständigkeit der Rohrbögen und/oder Abzweigstücke zu vertretbaren Kosten und somit ein vorteilhaftes Kosten-/Nutzen-Verhältnis bei der Realisierung der vorgeschlagenen Lösung.

In weiteren Ausführungen der Erfindung ist mindestens ein Teil der Querrohre aus einem Kunststoffmaterial wie aus Polyethylen, Polypropylen, PVDF oder auch aus Aluminium sowie Edelstahl gefertigt. Auch diese Ausführungen liegen im Interesse hoher Zuverlässigkeit und langer Betriebsdauer des Fördersystems bei moderaten Gestehungskosten.

In einer weiteren vorteilhaften Ausführung ist vorgesehen, dass das Verteilgestell auf schwingungsgedämpften Maschinenfüßen ruht. Schwingungsbedingte Störungen, wie etwa Undichtigkeiten an Rohrverbindungen, können hierdurch weitgehend ausgeschlossen oder jedenfalls minimiert werden.

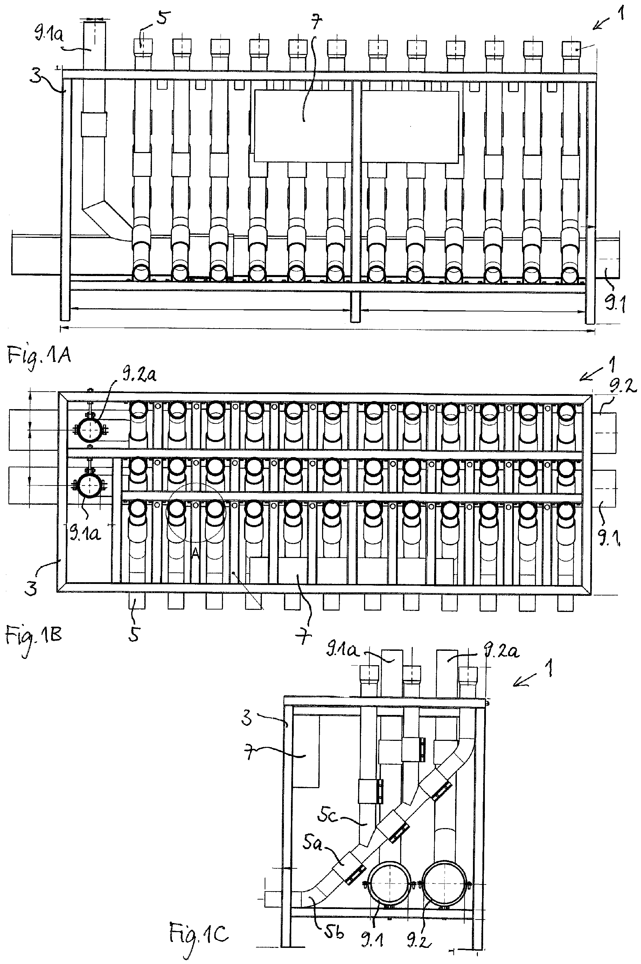

Vorteile und Zweckmäßigkeiten der Erfindung ergeben sich im Übrigen aus der nachfolgenden skizzenhaften Beschreibung eines Ausführungsbeispiels anhand der Figur. In dieser zeigen Fig. 1A eine Vorderansicht, Fig. 1B eine Draufsicht und Fig. 1C eine Seitenansicht eines Kupplungsbahnhofes 1 eines (nicht insgesamt gezeigten) Fördersystems für schüttfähige Güter.

Der Kupplungsbahnhof 1 umfasst in einem quaderförmigen Verteilgestell 3 eine Vielzahl von ankommenden und abgehenden Rohren 5 für schüttfähiges Material, die in zueinander parallelen Ebenen, welche parallel zu den kurzen Seitenflächen des Verteilgestells 3 sind, verlaufen und jeweils mehrere Rohrkupplungen 5a, Rohrbögen 5b und Abzweigstücke 5c aufweisen. Weiterhin ist im Verteilgestell ein Elektrik-/Elektronik-Steuerschrank 7 aufgehängt. Schließlich verlaufen nahe der unteren Begrenzungsebene des Verteilgestells 3 längs durch dieses hindurch zwei Querrohre 9.1, 9.2 für Druckluft und ein Wärme- oder Kühlmedium. Nahe einer der beiden kurzen Seitenflächen des Verteilgestells 3 (in Fig. 1A und 1B der linken kurzen Seitenfläche) geht von beiden Querrohren 9.1, 9.2 jeweils ein Abzweig 9.1a bzw. 9.2a ab.

Wie weiter oben ausführlicher erläutert, besteht mindestens ein Teil der Rohrkupplungen 5a, Rohrbögen 5b und Abzweigstücke 5c der Material-Rohre aus einer wärmebehandelten Edelstahllegierung mit erhöhter Abrasionsfestigkeit, insbesondere gegenüber in den Materialrohren durchgeleiteten Granulaten (z.B. Kunststoffgranulat). Die Medien-Rohre 9.1, 9.2 samt der zugehörigen Abzweige 9.1a bzw. 9.2a, sind aus einem für das jeweilige Medium geeigneten und kostengünstigen sowie dennoch hinreichend dauerhaften Kunststoff gefertigt.

Im Übrigen ist die Ausführung der Erfindung auch in einer Vielzahl von Abwandlungen der hier gezeigten Beispiele und weiter oben hervorgehobenen Aspekte der Erfindung möglich.

## Patentansprüche

1. Kupplungsbahnhof eines pneumatischen Fördersystems für schüttfähiges Material, der eine reguläre Parallel-Anordnung einer Mehrzahl von jeweiligen Enden ankommender und abgehender Rohre, die in zueinander parallelen Ebenen verlaufen, die im Gebrauchszustand des Kupplungsbahnhofs eine vertikale Achse einschließen, mit mindestens teilweise lösbaren Rohrkupplungen, Rohrbögen und Abzweigstücken in einem Verteilgestell umfasst, wobei
mindestens ein Teil der Rohrkupplungen, Rohrbögen und Abzweigstücken aus einer wärmebehandelten Edelstahllegierung gefertigt ist und
im Verteilgestell unter einem rechten Winkel zu der Parallel-Anordnung ankommender und abgehender Rohre verlaufende Querrohre zum Transport von Betriebsmedien einer Kunststoffverarbeitungsanlage, die das Fördersystem einschließt, gehaltert sind.

2. Kupplungsbahnhof nach Anspruch 1, wobei Querrohre mindestens für Druckluft und ein Wärme- oder Kühlmedium vorgesehen sind.

3. Kupplungsbahnhof nach Anspruch 1 oder 2, wobei die Querrohre nahe dem Boden des Verteilgestells geführt sind.

4. Kupplungsbahnhof nach einem der vorangehenden Ansprüche, wobei die Querrohre mit Abzweigen versehen sind, welche an einer Seitenfläche des Verteilgestells gehaltert sind und im Wesentlichen in einer zu den Ebenen der Parallel-Anordnung verlaufen.

5. Kupplungsbahnhof nach einem der vorangehenden Ansprüche, wobei die Rohrbögen und/oder Abzweigstücke aus einer wärmebehandelten Edelstahllegierung der Legierung V2A oder ähnlicher gefertigt sind, die einer Wärmebehandlung in einer Salzschmelze unterzogen wurde.

6. Kupplungsbahnhof nach einem der vorangehenden Ansprüche, wobei mindestens ein Teil der Querrohre aus einem Kunststoffmaterial aus Polyethylen, Polypropylen, PVDF oder aus Aluminium oder Edelstahl besteht.

7. Kupplungsbahnhof nach einem der vorangehenden Ansprüche, wobei das Verteilgestell auf schwingungsgedämpften Maschinenfüßen ruht.
